(19) Europäisches Patentamt
European Patent Office
Office européen des brevets

(11) **EP 2 357 539 B1**

(12) **EUROPEAN PATENT SPECIFICATION**

(45) Date of publication and mention of the grant of the patent:
**06.07.2016 Bulletin 2016/27**

(21) Application number: **10150524.6**

(22) Date of filing: **12.01.2010**

(51) Int Cl.:
*G03H 1/08* *(2006.01)*     *G02B 21/00* *(2006.01)*
*G03H 1/04* *(2006.01)*     G03H 1/02 *(2006.01)*
G03H 1/00 *(2006.01)*       G01B 9/02 *(2006.01)*

(54) **Off-axis interferometer**

Außeraxiales Interferometer

Interféromètre désaxé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**17.08.2011 Bulletin 2011/33**

(73) Proprietor: **Université Libre de Bruxelles**
**1050 Bruxelles (BE)**

(72) Inventors:
• **Dubois, Frank**
  **1150 BRUXELLES (BE)**
• **Yourassowsky, Catherine**
  **1150 BRUXELLES (BE)**

(74) Representative: **Van Malderen, Joëlle**
**pronovem - Office Van Malderen**
**Avenue Josse Goffin 158**
**1082 Bruxelles (BE)**

(56) References cited:
**EP-B1- 1 631 788     US-A- 3 572 934**

• **DUBOIS F, YOURASSOWSKY C, CALLENS N, MINETTI C, QUEECKERS P: "Applications of digital holographic microscopes with partially spatial coherence sources" JOURNAL OF PHYSICS : CONFERENCE SERIES, vol. 139, 012027, 11 December 2008 (2008-12-11), pages 1-6, XP002578564 ISSN: 1742-6588**
• **PATURZO M ET AL: "Resolution-enhanced approaches in digital holography" PROCEEDINGS OF SPIE - THE INTERNATIONAL SOCIETY FOR OPTICAL ENGINEERING - OPTICAL MEASUREMENT SYSTEMS FOR INDUSTRIAL INSPECTION VI, SPIE, US LNKD-DOI:10.1117/12.830654, vol. 7389, 15 June 2009 (2009-06-15), pages 738905-1, XP007912135 ISBN: 978-0-8194-7672-2**
• **MELNINKAITIS A ET AL: "Time-resolved digital holography: a versatile tool for femtosecond laser-induced damage studies", PROCEEDINGS OF SPIE, SPIE, US, vol. 7504, 21 September 2009 (2009-09-21), pages 75040o/1-13, XP009143601, ISSN: 0277-786X, DOI: 10.1117/12.836473 [retrieved on 2009-12-29]**

**Description**

**Field of the Invention**

The present invention is related to an off-axis digital holographic microscope.

**State of the Art**

In prior art interferometers, an incident light beam is usually split into an object beam and a reference beam and then recombined onto a recording plane where the object beam and the reference beam interfere, producing interference fringes. The objective of such devices is the measurement of the complex amplitude of the light (i.e. phase and amplitude information).

Generally, the light used in such measurement has a high coherency, such as the light produced by lasers. This has several drawbacks, such as the appearance of coherent noise (speckle field) and the high cost associated with highly coherent light sources.

In many cases, a small angle is introduced between the object beam and the reference beam in order to obtain low frequency spatially heterodyne fringes such as disclosed in US7002691. These kinds of configurations are generally called off-axis configurations due to the non-zero angle between the interferometer axis and one of the interfering beams.

In such off-axis configuration a highly coherent incident light is compulsory to observe interference: if the path length differences between the reference beam and the object beam are larger than the coherence length of the incident beam, no interference can be observed, and the phase information is lost.

This means that, for temporally partially coherent light, the difference in path length at different positions in the recording plane introduced by the small angle can be sufficient to disrupt the coherency, so interferences will only be observed in part of the recording plane, in which the coherency is maintained.

The recording of phase and amplitude (or complex amplitude) information is the basis of holography in general, and more specifically of digital holographic microscopy (DHM). In DHM, a hologram is recorded with a CCD camera and the reconstruction of a three-dimensional model of the observed sample is performed by a computer. The hologram is obtained by the use of an interferometer. This procedure provides an efficient tool for refocusing, slice-by-slice, the depth images of thick samples. DHM allows for obtaining quantitative phase contrast imaging with numerous applications as the observation of biological samples. The depth reconstruction capability makes DHM a powerful tool for the implementation of 3D velocimetry. As digital holography provides the complex amplitude, powerful processing methods have been implemented, such as automated refocusing, aberration compensation, 3D pattern recognition, segmentation and border processing.

The principle of digital holography, with separated object beam and reference beam, consists in extracting the complex amplitude information of an object beam from the recorded interference patterns between the object beam and a reference beam. The complex amplitude can then be processed for computing digital refocusing and for performing quantitative phase contrast imaging. There are two main types of configuration: On-line configuration and Off-axis configurations.

The complex amplitude is generally obtained by using an interferometer such as a Mach-Zehnder or a Michelson interferometer.

In On-line configurations, as disclosed by I.YAMAGUCHI ET AL. in "Phase-shifting digital holography", Opt. Lett. 22, 1268-1270 (1997), the angle between the reference and the object beams incident on the camera sensor is as small as possible. The computation of the complex amplitude needs a phase stepping method where several interferometric images are recorded with small optical path changes introduced between the object and reference beam. The optical phase information is computed by implementing the several interferometric images into a formula.

The main disadvantage of the on-line configuration is the need for sequentially recording several interferometric images that limits the acquisition speed due to the camera frame rate. Indeed, the object has to remain static during the complete acquisition that takes the time of several frames recording.

In Off-axis configuration, such as disclosed in US 6,525,821 and by TAKEDA ET AL. in "Fourier-transform method of fringe-pattern analysis for computer-based topography and interferometry," J. Opt. Soc. Am. 72, 156-160 (1982), there is a non-zero mean angle between the object and reference beams that enables the complex amplitude computation from only one recorded interferometric image. With respect to the on-line configuration, this is a decisive advantage for the analysis of rapidly varying phenomena. However, the use of a Mach-Zehnder or a Michelson interferometer in those configurations requests an optical source of high temporal coherence. Otherwise, the fringe modulation is not constant due to variable optical delays over the field of view between the object and reference beams.

As disclosed by DUBOIS ET AL. in "Improved three-dimensional imaging with digital holography microscope using a partial spatial coherent source" Appl. Opt. 38, 7085-7094 (1999) and in "application of digital holographic microscopes with partially spatial coherence sources" in J. of Phys.: Conf. Series 139 (2008) the use of partially coherent illumination improves the quality of the holographic recording by decreasing the coherent artefact noise. In transmission, the most effective noise reduction is obtained by using spatial partial coherent illumination. This type of illumination is obtained by decreasing the coherence properties of a laser beam, or by increasing the spatial coherence of an incoherent source as a Light Emitting Diode by an optical filtering system.

With the usual set up used to reduce the spatial coherence of a laser, the laser beam is focused close to a moving ground glass. For a given position of the ground glass, the transmitted light through the sample is a speckle field. When the ground glass is moving, and supposing the exposure time is long enough to obtain an averaging effect, it can be shown that this type of source is equivalent to a spatial partial coherent light source of which the spatial coherence distance is equal to the average speckle field. This method for preparing the source keeps a high degree of temporal coherence that enables the off-axis method. However, illumination fluctuations arise when short exposure times are requested. In practice, it is difficult to achieve fast enough moving ground glass so as to record dynamical object requiring short exposure time.

With the set up that increases the spatial coherence of an incoherent source or non-laser source, the temporal incoherence properties are maintained. In such case, it is not possible to implement the Off-axis configuration nor is it possible to record the full complex amplitude information in one single frame.

Regarding the positioning of samples, two main types of configurations can be defined: differential configuration, as disclosed in EP 1631788, wherein the sample is located in front of the interferometer, and classical configuration as defined in EP 1399730, wherein the sample is located in one arm of the interferometer.

## Aims of the Invention

The present invention aims to provide an interferometer that overcomes the drawbacks of prior art interferometers.

More specifically, the present invention aims to provide an off-axis interferometer able to work with partially coherent light sources.

Patent document US3572934 discloses longitudinally reversed shearing interferometry wherein a grating is used to split a coherent light beam into two interfering beams. The used light source is both temporally and spatially coherent (laser).

In the article "Time resolved digital holography: a versatile tool for femtosecond laser induced damage studies", (laser induced damage in Optical materials, 2009, Proc of SPIE vol. 7504) A. Melininkaitis et Al. discloses an holographic recording device comprising a grating to obtain off-axis interference. The setup is using highly spatially coherent light source, and would not be able to record homogeneous interference patterns with spatially partially coherent light source. In the article "Resolution-enhanced approaches in digital holography", (Optical Measurement Systems for Industrial Inspection VI, Proc. of SPIE, vol.7389), M.Paturzo et al discloses a method using a dynamic diffraction phase-grating for increasing synthetically the aperture of a digital holography imaging system in a lensless configuration.

The present invention also aims to provide digital holographic microscope (DHM) configurations, which enable the use of the off-axis configurations either with partial temporal and/or with spatial coherent source. This results in the capability to implement fast colour digital holographic recording at very low noise levels.

The present invention further aims to provide digital holographic microscopes that enable the use of partial coherent sources created from an incoherent source with the off-axis configuration. It is a significant improvement as it allows operating the microscope in fast mode without the disadvantage of fluctuations resulting from the configuration with a laser (coherent noise). Moreover this implementation enables the use of low cost sources as LED and gives the possibility to record simultaneously red-green-blue holograms to provide full colour digital holographic microscopy without the coherent noise.

## Summary of the Invention

A first aspect of the invention is related to an off-axis digital holographic microscope as recited in appended independent claim 1.

By off-axis, it is meant that at least one of the interfering light beams has a non-zero angle with regard to the interferometer axis, or equivalently, that the interfering light beams are non-parallel.

By two planes optically conjugated in an optical system, it is meant that one of the plane is the optical image of the other one.

A grating having a periodicity of d splits an incident beam into several beams fulfilling the condition:

$$d\left(\sin\theta_m + \sin\theta_i\right) = m\lambda$$

wherein θm is the angle between the diffracted light beam and the grating normal, θi is the angle between the incident light beam and grating normal, λ is the light wavelength and m is an integer called "diffraction order". The light that corresponds to direct transmission (or specular reflection in the case of a reflection grating) is called the zero order, and is denoted m = 0. The other light beams occur at angles which are represented by non-zero integers m. Note that m can be positive or negative, resulting in diffracted orders on both sides of the zero order beam.

Other configurations of the off-axis digital holographic microscope according to the invention are recited in appended independent claims 3 and 4. Other aspects of the invention are recited in the appended dependent claims.

## Brief Description of the Drawings

Fig. 1 illustrates the limitation of coherency between two secant interfering beams in plane.

Fig. 2 represents an interferometer according to the present invention.

Fig. 3 represents a transmission digital holographic microscope working in differential mode, comprising an interferometer according to the present invention.

Fig. 4 represents a transmission digital holographic microscope comprising an interferometer according to the present invention.

Fig. 5 represents a reflexion digital holographic microscope comprising an interferometer according to the present invention.

Fig. 6 represents a transmission digital holographic microscope working in differential mode, comprising an interferometer according to the present invention.

Fig. 7 represents a transmission digital holographic microscope with fluorescence capabilities comprising an interferometer according to the present invention.

## Figure keys

**1.** First light beam
**2.** Second light beam
**3.** Third light beam
**4.** Recording means
**5.** Diffracted light beam (non-zero order diffraction)
**6.** Non-zero order diffracted parallel light beam
**6'.** Zero order diffracted parallel light beam
**7.** Non-diffracted light beam (or zero order diffraction)
**8.** Optical stop
**9.** Incident light beam
**10.** Recording plane
**11.** Compensating means for compensating wedge
**12.** 2*Coherence length
**13.** Interference area
**14.** Coherence plane
**15.** Interferometer
**16.** Reference mirror
**17.** fluorescence excitation light source
Bs1, Bs2, Bs3 and Bs4: Beam splitters
EF: excitation filter
G: Grating
L1, L2, L3, L4, L5, L6 and L7: lenses
M11 and M12: microscope objectives
M1, M2 and M3: mirrors
P: pinhole in a screen
Sa: transmission sample or sample holder
SF: spectral filter
So: Illumination source
RA: rotation assembly

Rs: reflecting sample or sample holder
W: wedge.

In interferometry, when using partially coherent light, it is of key importance to maintain the coherence of the incident light in a recording plane to observe interference fringes. In many cases the interference fringes are obtained by splitting a first (incident) light beam into a second and third light beam, and recombining the third and second light beam with a small angle introduced between them.

In that case, the small coherence length of the partially coherent incident light (the light to be analysed) introduces a strong limitation: the coherence plane of both beams being non-parallel, they can only interfere in a small area at the intersection between both planes, no interference being observed when the distance between the coherences planes is larger than the coherence length.

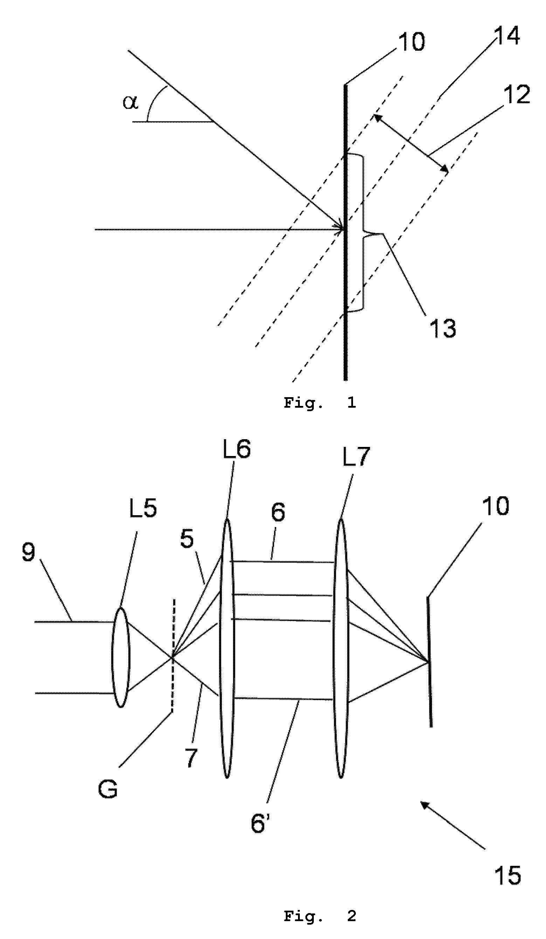

This is illustrated in Fig. 1 wherein a light beam perpendicular to a plane is interfering with another, non parallel light beam having an off-axis α from the plane. As represented, the non parallel light is only coherent (able to interfere) in the vicinity of the coherency plane 14, at a distance lower than the coherence length 12, defining a limited area 13 wherein interference is observed.

The present invention discloses an interferometer wherein the coherence plane of an interfering light beam is not perpendicular to the propagation direction of the light beam in the vicinity of a recording plane. This results in the ability of the non-perpendicular light beam to interfere with a perpendicular light beam and produce a fringe contrast that is independent of the position on the recording plane. This permits the recording of off-axis interfering fringes (spatially heterodynes fringes) even in the case of light having limited coherence length, such as the light produced by a LED, a gas discharge lamp,...

Using as first (incident) light beam a partial temporal coherent light beam, the second and third light beams in prior art interferometers can only interfere in corresponding zones defined by the coherence length. This means that the difference in optical path length and phase shifting due to optical devices on the optical path between the second and third light beam should remain smaller than the coherence length of the light source.

Temporal coherence is the measure of the average correlation between the values of a wave at any pair of times, separated by time interval τ. It characterizes whether a wave can interfere with itself at a different time. The time interval over which the phase or amplitude vary by a significant amount (hence the correlation decreases by a significant amount) is defined as the coherence time $\tau_c$. At τ=0 the degree of coherence is perfect, whereas it significantly drops at time interval $\tau_c$. The coherence length $L_c$ is defined as the distance the wave travels in time $\tau_c$. The coherence length can be estimated by the formula:

$$L_c = \frac{2\ln(2)}{\pi n} \frac{\lambda^2}{\Delta\lambda}$$

Wherein λ is the light wavelength, Δλ is the spectral width of the source and n is the propagating refractive index. For a typical LED source, this represents some wavelengths to some tens of wavelengths. For example, for a LED having a wavelength of 650nm and a spectral bandwidth of 15nm (typical values for commercially available LEDs), the coherence length is about 20λ. This means that the off-axis reference beam cannot have a phase shifting of more than the coherence time, at any place in the recording plane. This also means that the number of fringes induced by the angle difference between the reference beam and the object beam cannot be more than about 20, which is a strong limitation.

The limited coherence time can also arise from the pulse duration of ultra-short pulse laser. Typically, such pulsed laser has pulse duration of several femtoseconds, thus pulse length limited to some wavelength. In that case, the coherence time is equal to the pulse duration. Again, this means that the number of fringes induced by the angle difference between the reference beam and the object beam cannot be more than the number of wavelength representing the pulse length.

Preferably, to avoid this limitation in both cases, the present invention takes advantage of the particular properties of diffraction gratings for producing an off-axis reference beam without disrupting the temporal coherence of the interfering beams in the recording plane.

In the interferometer 15 of the present invention a diffraction grating G is placed in the back focal plane of a lens L5 placed on the optical axes of an incident light beam 9. The grating G induces the splitting of the incident light beam 9 into a diffracted beam 5(reference) and a non-diffracted light beam 7(being eventually the object beam). Then, a second lens L6 placed at focal distance of the gratings G, reshape both the diffracted beam and non diffracted beam into beams parallel to the optical axis. L5, L6 and the grating G are selected to obtain behind L6, two light beams spatially separated, a diffracted beam and a non-diffracted light beam. The non-diffracted light beam may either become the object beam or be eliminated by an optical stop. In the latter case, another object beam can be provided by a larger optical structure, as will be described hereafter. The diffracted beam is then recombined with the object beam and focalised by means of an objective lens L7 on a recording plane, the recording plane being located in the back focal plane of L7.

The diffracted beam being parallel to the optical axis of L7, but not centred on this optical axis, L7 will provide an off-axis angle to said diffracted beam.

Alternatively, the interfering light beams can be any pair of diffracted light beams having different diffraction order. For example, the +1 order diffracted light beam can be selected as the reference light beam, and -1 order symmetrical diffracted light beam can be selected as the object beam.

Preferably, an optical stop is used to stop all but two diffracted light beams selected to interfere on the recording plane.

It can be shown that, in such a configuration, the grating does not disturb the temporal coherence of any non-zero order diffracted light beam. The temporal coherence is related to the optical path travel. Therefore, it is equivalent to demonstrate that an optical temporal pulse that illuminates the back focal planes of L5 and L4 at a given time will simultaneously illuminate the entire back focal plane L7.

Considered that a grating G, of which the transparency is defined by $g(x,y)=(1+\sin Kx)/2$, is illuminated by a monochromatic plane wave of amplitude $A$. Assuming that the couple of lenses L6-L7 is an afocal system (L6-L7 forming a 4f type system), the amplitude in the recording plane is given by:

$$u_v(x,y) = B \exp\left\{ j\frac{4\pi v}{c}(f_6 + f_7) \right\} g\left( -\frac{f_6}{f_7}x, -\frac{f_6}{f_7}y \right) \qquad (1)$$

in which $B$ is a constant that does not play a significant role, $j = \sqrt{-1}$, $v$ is the optical frequency, $c$ is the speed of light in vacuum, and $f_6$, $f_7$ are the focal lengths of L6 and L7. Calculating the contribution of only one diffracted beam in the recording plane, Eq.(1) becomes:

$$u'_v(x,y) = B' \exp\left\{ j\frac{4\pi v}{c}(f_6 + f_7) \right\} \exp\left( -jK\frac{f_6}{f_7}x, \right) \qquad (2)$$

in which $K = 2\pi/\Lambda$, with $\Lambda$ being the spatial period of the grating. B' is a constant that does not play an important role.

The illumination by a delta Dirac shaped temporal pulse is obtained by performing the Fourier transformation of Eq.(2):

$$u'_t(x,y) = B' \delta\left( t - \frac{2}{c}(f_6 + f_7) \right) \exp\left( -jK\frac{f_6}{f_7}x \right) \qquad (3)$$

in which $t$ is the time, Eq. (3) expresses the fact that a spatially uniform light pulse in the front focal plane of L6 will simultaneously arrive everywhere in the back focal plane of L7 without time interval depending on the position $(x,y)$. The exponential part expresses the fact that the beam is incident to the sensor plane with a slant angle with respect to the optical axis. When the optical paths of the interferometer of the present invention are equalized, it will therefore be possible to record the interference pattern in the entire plane of the sensor between the object and the reference beam. The slant angle of the reference beam provides the off-axis configuration.

As the demonstrated property of said grating is independent of the non-diffracted light beam, the disclosed setup, comprising a grating G located in a plane conjugated with the recording plane 10 can be used in any off-axis setup. This conjugation can be for example obtained by the use of a 4f type system with a grating between the two lenses L5, L6 and a focusing lens L7.

At this stage, it can be noticed that the diffracted beam, now having its coherency plane parallel to the recording plane, can interfere with any light beam having equivalent optical path and having its coherency plane parallel to the recording plane. More particularly, it can interfere with the non-diffracted light beam, but also with other order diffracted light beams, or a light beam passing through another arm of a larger Mach-Zehnder or Michelson interferometer, provided that the optical path does not differ by more than the coherence length of the incident light.

In the off-axis Digital Holographic microscope (DHM) of the present invention, digital holograms are recorded using partially coherent light sources. In order to obtain such partial coherent light sources, incoherent light sources such as LEDs can be used. In order to obtain the partial coherence necessary to observe the interference fringes required to enable determining the phase information of the incoming light, a spatial filter can be used.

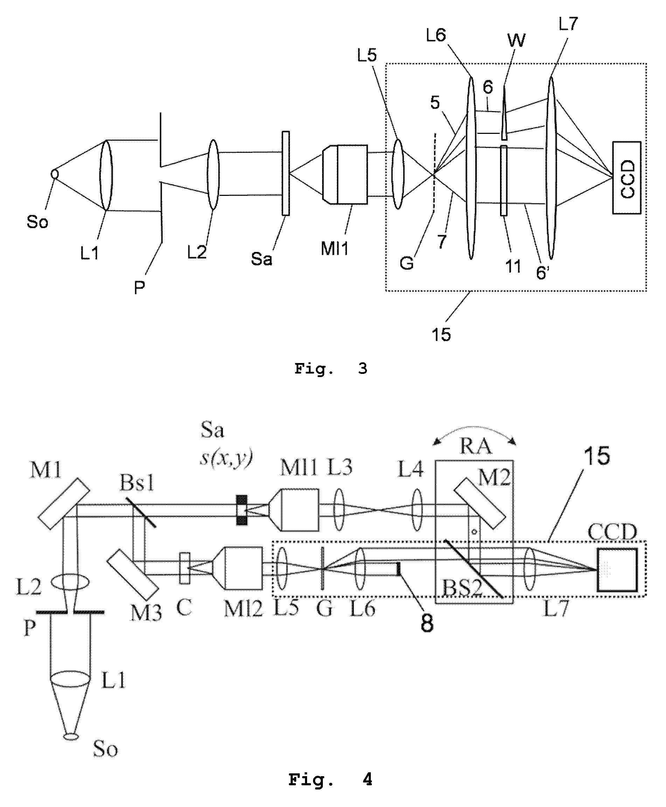

A first example of a microscope using an interferometer 15 according to the invention is represented in fig. 3. In this figure, a partially coherent light source So such as a LED is located in the back focal plane of a lens L1. The produced light beam is then spatially filtered through a pinhole P in a screen in order to increase its spatial coherency. The pinhole P is located in the back focal plane of a lens L2, for illuminating a sample Sa. The sample Sa is located in the back focal plane of the microscope objective ML1 and then follows the interferometer 15 as previously described. The hologram in this figure is recorded by means of a CCD camera.

In the latter case, a wedge W is preferably inserted in the optical path of one of the second or third light beams, in order to induce a slight shift of the images produced by the diffracted and non-diffracted light beams, in order to obtain the differential interferogram as described in EP 1631788. In this case, preferably compensation means 11 are introduced in the optical path of the non-diffracted light beam for compensating the phase shift introduced by the wedge in the diffracted beam.

Alternatively, the interferometer 15 can be introduced in a larger optical structure, such as a Mach-Zehnder interferometer as represented in the DHMs represented in fig. 4 to 7. In such case, the non-diffracted light beam 15 is stopped by an optical stop 8 and the object beam is provided by another optical path, for instance another arm of a Mach-Zehnder interferometer.

As is the case with usual holographic microscopes, a first light beam 1 is splitted into a second light beam 2 and a third light beam 3 by means of first beam splitter Bs1, and recombined by a second beam splitter bs2 into a recombined beam, said second and third light beam interfering in the recombined beam, forming an interference pattern on a recording medium, such as a CCD sensor, in order to obtain interference patterns. In such case, the interferometer 15 of the present invention is inserted in the reference arm of the Mach-Zehnder interferometer in order to obtain the off-axis configuration, the non-diffracted beam 6' being stopped by an optical stop 8.

Preferably, the presence of lenses L5 and L6 is compensated by lenses L3 and L4 on the object beam path in order to compensate the phase modification induced by said lenses L5 and L6.

Preferably, the lens L7 is placed after the beam splitter BS2 of the Mach-Zehnder interferometer, used for recombining the object and reference beam. This permits sharing said lens L7 between the object and reference beam.

Alternatively, the lens L7 can be replaced by two lenses located respectively in the optical path of the reference beam and on the optical path of the object beam, both lenses focusing on the recording means, but being located before the recombination means.

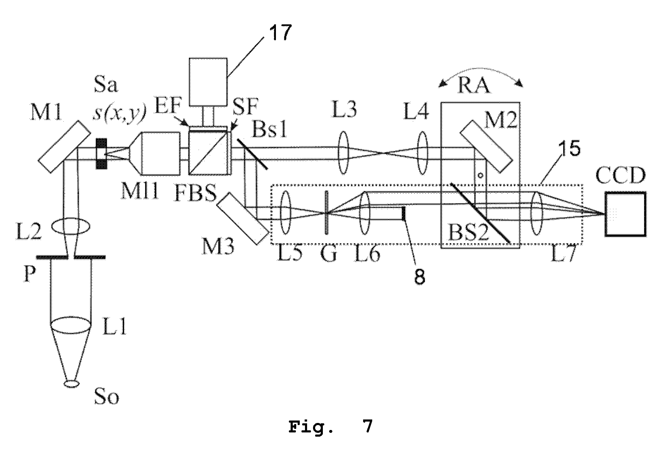

Configurations including fluorescence excitation source can also be implemented as represented in fig.7.

As no phase shifting needs to be used, the disclosed DHM can be used for recording fast dynamical events, recording several successive frames so as to record time sequences of 3D representation of the sample to be observed.

This implementation enables the use of low cost sources, such as LEDs, and, with colour sensors, it enables the simultaneous recording of red-green-blue holograms by using three-LED illumination so as to provide full colour digital holographic microscopy without the coherent noise. Up to now, the implementation of colour digital holographic microscopy requested the use of complex recording processes. In the disclosed invention, the three colours can be recorded simultaneously.

Several types of colour sensors are commercially available, including single colour sensors such as colour CCD and triple sensor designs. In triple sensor designs, a prism block (i.e. a trichroic assembly comprising two dichroic prisms) can filter the obtained interferogram into the three primary colours, red, green, and blue, directing each colour into a separate charge-coupled device (CCD) or Active pixel sensor (CMOS image sensor) mounted to each face of the prism.

There are several types of transmission gratings that can be implemented. The simplest grating type is the Ronchi grating, which is constituted by a transparent optical plate on which parallel opaque lines of width l are printed. There is a constant clear spacing L between the consecutive opaque lines. Ronchi gratings often have a clear aperture width equal to the opaque one. The significant quantity that characterizes a Ronchi grating and the diffraction angle for a given wavelength is the grating period $P=L+1$. The diffraction analysis of a Ronchi grating is performed by first decomposing the transmittance function according to a Fourier series. For a given wavelength, each Fourier component gives rise to diffraction order characterized by a diffraction angle $\theta m$, in which m is an integer and $\theta$ is the first diffraction angle.

The diffracted amplitude in each diffraction order is proportional the corresponding Fourier component. In the interferometer of the invention 15, the grating period is selected in order to guarantee a spatial separation of the diffracted beams in the plane, where the optical stop 8 is placed.

Usually, it is one of the first diffraction orders (m=+1 or -1) that is kept for the reference beam incident on the detector. A limitation of the Ronchi grating is the spread of the light intensity among several diffraction orders thus reducing the available light for the interferometric measurements.

In order to optimize the diffraction efficiency in the diffraction order kept for the holographic process, a blazed diffraction grating can be implemented. Blazed diffraction gratings also have a periodical structure on one of the surfaces of an optical plate. In this case it is a tooth shaped relief of a surface that optimizes the diffraction efficiency in the m=1 or m=-1 diffraction orders.

In order to optimize the diffraction efficiency, it is also possible to implement thick phase holographic gratings. This type of grating is obtained by recording in a photosensitive material, for example dichromated gelatin, the interference pattern between two planes waves. Afterwards, the plate is processed and is able to mostly diffract the light in a diffraction order according to a Bragg diffraction mode. The angle between the recording plane wave determines the grating period.

The analog outputs can then be digitalised and treated by a computer so as to obtain a three-dimensional colour representation of the samples.

A partial temporal and spatial source can be constituted by a source (So), a collimating lens (L1), a pinhole (P) and a lens (L2). The temporal coherence results from the spectral width of the source (So). Typically, it can be a LED with a spectrum having a peak (for example the wavelength $\lambda$=650$nm$, $\Delta\lambda$=15$nm$), or a set of LEDs providing a set of peaks, to achieve colour holographic recording. The beam is collimated by the lens (L1) and is filtered by the pinhole (P) so as to increase the spatial coherence. It can be shown that the emerging spatial coherence dependency, emerging out of the lens (L2), is uniform and can be modelled by a coherence function $\gamma(x_1 - x_2, y_1 - y_2)$, in which ($x_1, y_1$ and ($x_2, y_2$) are spatial coordinates perpendicular the optical axis $z$.

This implementation of the partial coherent source is not restrictive and could be realized in other ways, such as with a de-correlated laser beam by a moving ground glass.

## Description of Preferred Embodiments of the Invention

### Mach-Zehnder configuration

The scheme of the digital holographic microscope based on a Mach-Zehnder configuration that enables the off-axis recording with optical sources of partial spatial and temporal coherence is depicted by Fig.4.

In the case of Fig.4, the light source is constituted by a source (So), a collimating lens (L1), a pinhole (P) and a lens (L2).

After a reflection by the mirror M1, the beam is split by BS1 in the object beam that illuminates the sample in transmission and the reference beam, which is redirected towards the microscope lens ML2. The image of the front focal plane of MI1 is performed by the set of lenses MI1, L3, L4 and L7. For forming the image, the back focal plane of L3 is corresponding to the front focal plane of L4 and the sensor is located in the back focal plane of L7.

In this configuration, the interferometer of the invention 15 is represented by the lenses L5, L6, and L7 and the grating G.

The lenses MI1, L3 and L4 have their counterparts in the reference arm, respectively the lenses MI2, L5, L6, in such a way that the reference and object beams except for the sample, the grating G and the optical stop 8 are almost identical. This guarantees a proper alignment of the two beams on the sensor, where they are interfering. This is requested by the partial spatial coherent nature of the illumination.

The front focal plane of the MI2 lens, where the optional component C that can be an optical path compensator and/or an attenuator is, is imaged on the back focal plane of L5, which also is the front focal plane of L6, where the grating G is. The role of the grating is redirecting the light by diffraction in such a way that the incident object and reference beams on L7 are spatially separated and propagating in parallel. As already demonstrated, this setup with L5, G, L6 and L7 permits maintaining the temporal coherence in the sensor plane in the case of partial temporal coherence, and producing off-axis interference.

The lens L7 superposes the objects and reference beams on the sensor with an average angle between them that originates from the grating diffraction. In this configuration, the mirror M2 is parallel to BS2 and M3 parallel to BS1. This relative orientation of the beam splitters and mirrors allows adjusting, without changing the beam positions on the sensor, the optical path by rotating the rotation assembly RA, on which the mirror M2 and the beam splitter BS2 are rigidly attached. Therefore the configuration allows to equalize the optical reference and object path beams.

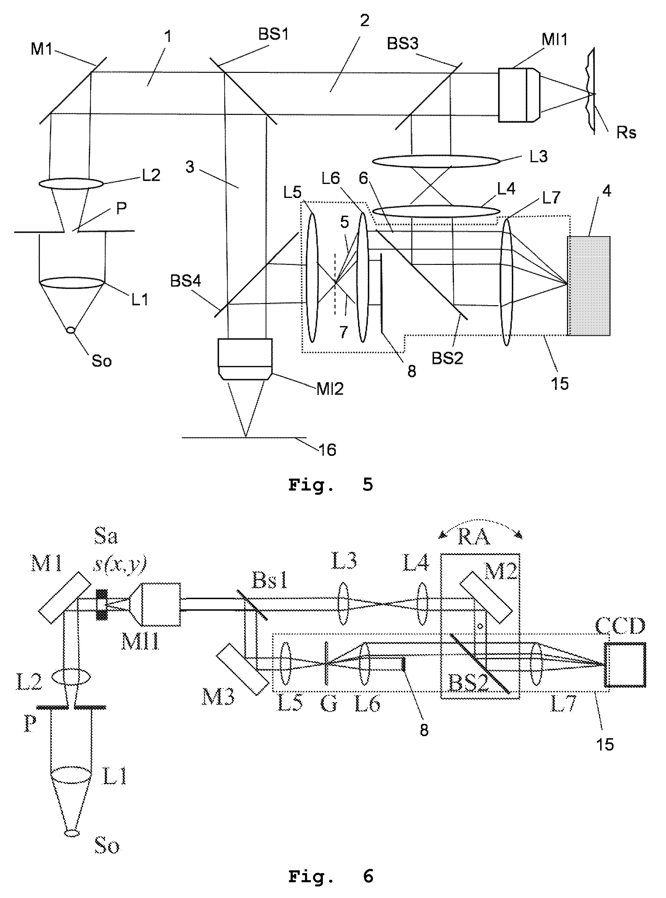

This configuration can be adapted to reflective samples, as represented in fig. 5. In that case, the sample holder Sa is removed, and the mirror M2 is replaced by a third beam splitter Bs3 which illuminates a reflective sample Rs through the objective lens ML1. The light reflected by the sample and focused by the objective lens is then redirected by third beam splitter Bs3 towards the second beam splitter as in the previous configuration. The same modification is applied to the optical path of the reference beam, the sample being replaced by a reference mirror 16.

### Differential configuration

The Mach-Zehnder configuration is suitable for applications in which the optical path variations introduced by the object is limited: in the case of very fluctuating object thickness, fringe density can become too high to be recorded by the sensor.

In addition, with reduced temporal partial illumination, in the Mach-Zehnder configuration, the fine tuning of the optical path when the object is changed can be difficult. For that reason, the differential digital holographic microscope was proposed. In the latter case, it is the differential optical phase that is measured presenting the advantages of an increased dynamic range for the phase measurement and the permanent adjustment of the interferometer regardless to the sample thickness.

Advantageously, the off-axis configuration with partial coherent sources, spatially and temporally, can be used in differential mode. The optical scheme is represented by Fig.6.

The partial temporal and spatial coherent source is constituted by a source (So), a collimating lens (L1), a pinhole (P) and a lens (L2). The beam is collimated by the lens (L1) and filtered by the pinhole (P) in order to increase the spatial coherence.

After a reflection by the mirror M1, the light beam illuminates the sample and is transmitted by the microscope lens Ml1. The light beam coming from Ml1 is then splitted by BS1 in two beams corresponding to a second and a third light beam. The image of the front focal plane of Ml1 located inside of the sample is performed by the set of lenses Ml1, L3, L4 and L7. For that purpose the back focal plane of L3 is in coincidence with the front focal plane of L4 and the sensor is located in the back focal plane of L7. In the same way, the image of the front focal plane of Ml1 is performed by the set of lenses Ml1, L5, L6 and L7, with the back focal plane of L3 corresponding to the front focal plane of L4. The distance between L4 and L7 is identical to the distance between L6 and L7.

Therefore, the same plane as the one of the sample plane, corresponding to the front focal plane of Ml1, is imaged on the CCD sensor. A shift is introduced between the images formed by the second and third light beams by slightly rotating the mirror M2 or the mirror M3. It is a shift of merely a few pixels, or even less than a pixel on the CCD sensor. The counterparts of the lenses L3 and L4 of the first optical channel 1, respectively the lenses L5, L6, are situated in the optical path of the third light beam in such a way that optical path of both second and third light beams, except for the sample, the grating G and the optical stop 8 are identical. This permits a proper alignment with the small shift of the two channels on the sensor where they are interfering.

The front focal plane of the Ml1 lens is imaged on the back focal plane of L5, which also is the front focal plane of L6, where the grating G is. The role of the grating is to redirect the light by diffraction in such a way that the incident beams of the two channels on L7 are spatially separated. The lens L7 superposes the two beams on the sensor with an average angle between them that originates from the grating diffraction. In the configuration, the mirror M2 is almost parallel to BS2 and M3 to BS1. These relative orientations of the beam splitters and mirrors allow adjusting, without changing the beam positions on the sensor, the optical path by rotating the rotation assembly RA on which the mirror M2 and the beam splitter BS2 are rigidly attached. Therefore the configuration allows equalizing the optical reference and object path beams.

The average angle between the object and the reference beam on the sensor provides the off-axis configuration. As was already demonstrated, there is a proper alignment, even in the case of a partial temporal coherence source, in order to homogeneously provide contrasted fringe pattern over the whole CCD sensor. It has to be noted that an attenuator can be placed in the optical path of the second light beam to compensate for the light loss originating from the grating. A transparent optical plate can be inserted in the optical path of the third light beam so as to compensate for the optical path difference introduced between the two channels by the attenuator.

A fluorescence source 17 can be used when the sample of interest is fluorescent as represented in fig.7. Its beam is reflected by the fluorescent beam splitter through the lens Ml1 to illuminate the sample. The back propagating fluorescent signal is transmitted by Ml1 and spectrally filtered by SF in order to remove the fluorescent excitation part before to be incident on BS1. As the lens Ml1 is limited by an aperture, the incoherent fluorescent signal is of partial spatial coherence when it emerges from Ml1, the result being that the two beams are able to interfere as long as the shift is smaller than that of the spatial coherence length.

## Claims

1. Off-axis digital holographic microscope comprising:

    - a spatially and temporally partially coherent light source arranged to produce a first partially coherent light beam (1);
    - a recording plane (10);
    - a microscope objective (ML1);
    - an object cell (Sa) arranged to hold a specimen to be studied located in a front focal plane of said microscope objective and said object cell (Sa) being optically conjugated with said recording plane (10);
    - a grating (G) located in a plane optically conjugated with said recording plane(10), said grating (G) defining a first and a second optical path, and said grating (G) being arranged to split the first light beam into a non-zero order diffracted light beam along the first optical path as a reference light beam and a second light beam with a different diffraction order along the second optical path;

- a first lens (L5) downstream the microscope objective, said grating (G) being located in the back focal plane of said first lens;

- a second lens (L6), the grating (G) being located in the front focal plane of said second lens (L6) and a third lens (L7)optically coupled to said second lens (L6), said recording plane (10) being located in the back focal plane of said third lens (L7) and said third lens being arranged to recombine the reference light beam and the second light beam into a recombined beam to be incident on the recording plane where they interfere with each other, wherein the optical path of the reference light beam and the optical path of the second light beam do not differ by more than the coherence length of the light source.

2. Digital holographic microscope according to claim 1 wherein the object cell (Sa) is illuminated by the first light beam (1), said microscope objective (ML1) being located upstream the grating (G) and wherein a wedge (W) is located in the second optical path for producing a differential hologram.

3. Off-axis digital holographic microscope comprising:

- a spatially and temporally partially coherent light source arranged to produce a first partially coherent light beam (1);
- a recording plane (10);
- a microscope objective (ML1);
- an object cell (Sa) arranged to hold a specimen to be studied located in a front focal plane of said microscope objective and said object cell (Sa) being optically conjugated with said recording plane (10);
- a grating (G) located in a plane optically conjugated with said recording plane(10);
- a Mach-Zehnder interferometer comprising a first beam splitter (Bs1) and a second beam splitter (Bs2), said first beam splitter (Bs1) being arranged to split said first light beam into a second light beam (2) and a third light beam (3);
- a first lens (L5), located in the optical path of said third light beam (3), arranged to focus said third light beam on said grating (G);
- a second lens (L6) having the same optical axis as the first lens (L5) and located at a focal distance of the grating (G) arranged to produce at least one non-zero order diffracted light beam, and said second beam splitter (Bs2) being arranged for recombining said second light beam and said diffracted light beam into a recombined beam;
- an optical stop arranged to stop the zero order diffracted light of said third light beam;
- recording means arranged to record interferometric signals produced by the interaction between the second light beam and the diffracted light beam, said recording means being located in the recording plane (10) of said interferometer (15);
- focusing means (L7) arranged to focus said recombined beam onto said recording means, the optical pathway of the second and third light beams being essentially equivalent and the object cell (Sa) and microscope objective being located in front of the first beam splitter (Bs1), defining a differential holographic configuration.

4. Off-axis digital holographic microscope comprising:

- a spatially and temporally partially coherent light source arranged to produce a first partially coherent light beam (1);
- a recording plane (10);
- a microscope objective (ML1);
- an object cell (Sa) arranged to hold a specimen to be studied located in a front focal plane of said microscope objective and said object cell (Sa) being optically conjugated with said recording plane (10);
- a grating (G) located in a plane optically conjugated with said recording plane(10);
- a Mach-Zehnder interferometer comprising a first beam splitter (Bs1) and a second beam splitter (Bs2), said first beam splitter (Bs1) being arranged to split said first light beam into a second light beam (2) and a third light beam (3);
- a first lens (L5), located in the optical path of said third light beam (3), arranged to focus said third light beam on said grating (G);
- a second lens (L6) having the same optical axis as the first lens (L5) and located at a focal distance of the grating (G) for producing at least, one non-zero order diffracted light beans, and said second bean splitter (Bs2) being arranged for recombining said second light beam and said diffracted light bean into a recombined beam;
- an optical, stop arranged to stop the zero order diffracted light of said third light beam;
- recording means arranged to record interferometric signals produced by the interaction between the second light beam and the diffracted light beam, said recording means being located in the recording plane (10) of said interferometer (15);
- focusing means (L7) arranged to focus said recombined beam onto said recording means, the optical pathway of the second and third light beams being essentially equivalent and wherein the object cell (Sa) and the microscope objective (M11) are located in the optical path of the second light beam (2).

5. Digital holographic microscope according to claim 4 wherein a second microscope objective (M12) is located in the optical path of the third light bean (3).

6. Digital holographic microscope according to claim 4 further comprising a third beam splitter (BS3) located on the second light bean pathway for illuminating a reflecting object ($R_S$) and a fourth beam splitter (BS4) located on the third light beam pathway for illuminating a reference mirror (16), defining a Mach-Zehnder geometry.

7. Digital holographic microscope according to any of the previous claims wherein the partially coherent light source comprises illumination means (So) selected from the group consisting of a LED, a gas discharge lamp, thermal sources and pulsed laser.

8. Digital holographic microscope according to any of the claims 3 to 6 wherein said recording means are colour sensitive recording means, and the light source simultaneously produces at least three separate wavelengths, for recording colour holographic interferogram.

9. Digital holographic microscope according to claim 7 wherein said light source comprises at least three LEDs of different wavelengths.

10. Digital holographic microscope according to claim 7 or 8 wherein the separate wavelengths correspond to Cyan Magenta and Yellow (CMY) or Red Green Blue (RGB) for colour reconstruction.

11. Digital holographic microscope according to any of the previous claims comprising a fluorescence excitation source (17) optically coupled to said sample holder.


**Patentansprüche**

1. Außeraxiales digitales holografisches Mikroskop, umfassend:

- eine räumlich und zeitlich teilweise kohärente Lichtquelle, die so ausgelegt ist, dass sie einen ersten, teilweise kohärenten Lichtstrahl (1) erzeugt;
- eine Aufzeichnungsebene (10);
- ein Mikroskop-Objektiv (ML1);
- eine Objektzelle (Sa), die so ausgelegt ist, dass sie eine zu untersuchende Probe aufnimmt, die in einer vorderen Brennebene des Mikroskop-Objektivs angeordnet ist, und wobei die Objektzelle (Sa) optisch zur Aufzeichnungsebene (10) konjugiert ist;
- ein Gitter (G), das in einer Ebene angeordnet ist, die optisch zur Aufzeichnungsebene (10) konjugiert ist, wobei das Gitter (G) einen ersten und einen zweiten optischen Pfad definiert, und das Gitter (G) so ausgelegt ist, dass es den ersten Lichtstrahl in einen Lichtstrahl mit Beugung einer von Null verschiedenen Ordnung entlang des ersten optischen Pfades als einen Referenzlichtstrahl und einen zweiten Lichtstrahl mit einer anderen Beugungsordnung entlang des zweiten optischen Pfades teilt;
- eine erste Linse (L5), die dem Mikroskop-Objektiv nachgelagert ist, wobei das Gitter (G) in der hinteren Brennebene der ersten Linse angeordnet ist;
- eine zweite Linse (L6), wobei das Gitter (G) in der vorderen Brennebene der zweiten Linse (L6) angeordnet ist, und eine dritte Linse (L7), die optisch mit der zweiten Linse (L6) gekoppelt ist, wobei die Aufzeichnungsebene (10) in der hinteren Brennebene der dritten Linse (L7) angeordnet ist, und die dritte Linse so ausgelegt ist, dass sie den Referenzlichtstrahl und den zweiten Lichtstrahl zu einem wiedervereinigten Strahl, der auf der Aufzeichnungsebene einfällt, wo sie miteinander interferieren, wiedervereinigt, wobei der optische Pfad des Referenzlichtstrahls und der optische Pfad des zweiten Lichtstrahls sich um nicht mehr als die Kohärenzlänge der Lichtquelle unterscheiden.

2. Digitales holografisches Mikroskop nach Anspruch 1, wobei die Objektzelle (Sa) durch den ersten Lichtstrahl (1) beleuchtet wird, das Mikroskop-Objektiv (ML1) dem Gitter (G) vorgelagert angeordnet ist, und wobei ein Keil (W) zum Erzeugen eines Differenzhologramms im zweiten optischen Pfad angeordnet ist.

3. Außeraxiales digitales holografisches Mikroskop, umfassend:

- eine räumlich und zeitlich teilweise kohärente Lichtquelle, die so ausgelegt ist, dass sie einen ersten, teilweise kohärenten Lichtstrahl (1) erzeugt;
- eine Aufzeichnungsebene (10);
- ein Mikroskop-Objektiv (ML1);
- eine Objektzelle (Sa), die so ausgelegt ist, dass sie eine zu untersuchende Probe aufnimmt, die in einer vorderen Brennebene des Mikroskop-Objektivs angeordnet ist, und wobei die Objektzelle (Sa) optisch zur Aufzeichnungsebene (10) konjugiert ist;
- ein Gitter (G), das in einer Ebene angeordnet ist, die optisch zur Aufzeichnungsebene (10) konjugiert ist;
- ein Mach-Zehnder-Interferometer, das einen ersten Strahlenteiler (Bs1) und einen zweiten Strahlenteiler (Bs2) umfasst, wobei der erste Strahlenteiler (Bs1) so ausgelegt ist, dass er den ersten Lichtstrahl in einen zweiten Lichtstrahl (2) und einen dritten Lichtstrahl (3) teilt;
- eine erste Linse (L5), die im optischen Pfad des dritten Lichtstrahls (3) angeordnet und so ausgelegt ist, dass sie den dritten Lichtstrahl auf das Gitter (G) fokussiert;
- eine zweite Linse (L6), welche dieselbe optische Achse wie die erste Linse (L5) aufweist und in einer Brennweite vom Gitter (G) angeordnet ist, die zum Erzeugen mindestens eines Lichtstrahls mit Beugung einer von Null verschiedenen Ordnung ausgelegt ist, und der zweite Strahlenteiler (Bs2) zum Wiedervereinigen des zweiten Lichtstrahls und des gebeugten Lichtstrahls zu einem wiedervereinigten Strahl ausgelegt ist;
- einen optischen Stopp, der so ausgelegt ist, dass er das Licht mit Beugung nullter Ordnung des dritten Lichtstrahls stoppt;
- Aufzeichnungsmittel, die so ausgelegt sind, dass sie interferometrische Signale aufzeichnen, die durch die Wechselwirkung zwischen dem zweiten Lichtstrahl und dem gebeugten Lichtstrahl erzeugt werden, wobei die Aufzeichnungsmittel in der Aufzeichnungsebene (10) des Interferometers (15) angeordnet sind;
- Fokussiermittel (L7), die so ausgelegt sind, dass sie den wiedervereinigten Strahl auf die Aufzeichnungsmittel fokussieren, wobei der optische Pfad der zweiten und dritten Lichtstrahlen im Wesentlichen äquivalent ist, und die Objektzelle (Sa) und das Mikroskop-Objektiv vor dem ersten Strahlenteiler (Bs1) angeordnet sind und eine Konfiguration eines Differenzhologramms definieren.

4. Außeraxiales digitales holografisches Mikroskop, umfassend:

- eine räumlich und zeitlich teilweise kohärente Lichtquelle, die so ausgelegt ist, dass sie einen ersten, teilweise kohärenten Lichtstrahl (1) erzeugt;
- eine Aufzeichnungsebene (10);
- ein Mikroskop-Objektiv (ML1);
- eine Objektzelle (Sa), die so ausgelegt ist, dass sie eine zu untersuchende Probe aufnimmt, die in einer vorderen Brennebene des Mikroskop-Objektivs angeordnet ist, wobei die Objektzelle (Sa) optisch zur Aufzeichnungsebene (10) konjugiert ist;
- ein Gitter (G), das in einer Ebene angeordnet ist, die optisch zur Aufzeichnungsebene (10) konjugiert ist;
- ein Mach-Zehnder-Interferometer, das einen ersten Strahlenteiler (Bs1) und einen zweiten Strahlenteiler (Bs2) umfasst, wobei der erste Strahlenteiler (Bs1) so ausgelegt ist, dass er den ersten Lichtstrahl in einen zweiten Lichtstrahl (2) und einen dritten Lichtstrahl (3) teilt;
- eine erste Linse (L5), die im optischen Pfad des dritten Lichtstrahls (3) angeordnet und so ausgelegt ist, dass sie den dritten Lichtstrahl auf das Gitter (G) fokussiert;
- eine zweite Linse (L6), welche dieselbe optische Achse wie die erste Linse (L5) aufweist und in einer Brennweite vom Gitter (G) zum Erzeugen mindestens eines Lichtstrahl mit Beugung einer von Null verschiedenen Ordnung angeordnet ist, und der zweite Strahlenteiler zum Wiedervereinigen des zweiten Lichtstrahls und des gebeugten Lichtstrahls zu einem wiedervereinigten Strahl ausgelegt ist;
- einen optischen Stopp, der so ausgelegt ist, dass er das Licht mit Beugung nullter Ordnung des dritten Lichtstrahls stoppt;
- Aufzeichnungsmittel, die so ausgelegt sind, dass sie interferometrische Signale aufzeichnen, die durch die Wechselwirkung zwischen dem zweiten Lichtstrahl und dem gebeugten Lichtstrahl erzeugt werden, wobei die Aufzeichnungsmittel in der Aufzeichnungsebene (10) des Interferometers (15) angeordnet sind;
- Fokussiermittel (L7), die so ausgelegt sind, dass sie den wiedervereinigten Strahl auf die Aufzeichnungsmittel fokussieren, wobei der optische Pfad der zweiten und dritten Lichtstrahlen im Wesentlichen äquivalent ist, und wobei die Objektzelle (Sa) und das Mikroskop-Objektiv (M11) im optischen Pfad des zweiten Lichtstrahls (2) angeordnet sind.

**5.** Digitales holografisches Mikroskop nach Anspruch 4, wobei ein zweites Mikroskop-Objektiv (M12) im optischen Pfad des dritten Lichtstrahls (3) angeordnet ist.

**6.** Digitales holografisches Mikroskop nach Anspruch 1, ferner umfassend einen dritten Strahlenteiler (BS3), der auf dem Pfad des zweiten Lichtstrahls zum Beleuchten eines reflektierenden Objekts (R$_S$) angeordnet ist, und einen vierten Strahlenteiler (BS4), der auf dem Pfad des dritten Lichtstrahls zum Beleuchten eines Referenzspiegels (16) angeordnet ist und eine Mach-Zehnder-Geometrie definiert.

**7.** Digitales holografisches Mikroskop nach einem der vorhergehenden Ansprüche, wobei die teilweise kohärente Lichtquelle Beleuchtungsmittel (So) umfasst, die aus der Gruppe ausgewählt sind, die aus einer LED, einer Gasentladungslampe, thermischen Quellen und einem gepulsten Laser besteht.

**8.** Digitales holografisches Mikroskop nach einem der Ansprüche 3 bis 6, wobei die Aufzeichnungsmittel farbempfindliche Aufzeichnungsmittel sind, und die Lichtquelle gleichzeitig mindestens drei getrennte Wellenlängen zum Aufzeichnen eines holografischen Farbinterferogramms erzeugt.

**9.** Digitales holografisches Mikroskop nach Anspruch 7, wobei die Lichtquelle mindestens drei LEDs von verschiedenen Wellenlängen umfasst.

**10.** Digitales holografisches Mikroskop nach Anspruch 7 oder 8, wobei die getrennten Wellenlängen Cyan, Magenta und Gelb (CMY) oder Rot, Blau, Grün (RGB) zur Farbrekonstruktion entsprechen.

**11.** Digitales holografisches Mikroskop nach einem der vorhergehenden Ansprüche, umfassend eine Fluoreszenzanregungsquelle (17), die optisch mit dem Probenhalter gekoppelt ist.

**Revendications**

**1.** Microscope holographique numérique hors-axe comprenant:

- une source de lumière partiellement cohérente spatialement et temporellement conçue pour produire un premier faisceau de lumière partiellement cohérente (1) ;
- un plan d'enregistrement (10) ;
- un objectif de microscope (ML1) ;
- une cellule objet (Sa) conçue pour maintenir un échantillon à étudier situé dans un plan focal avant dudit objectif de microscope et ladite cellule objet (Sa) étant conjuguée optiquement avec ledit plan d'enregistrement (10) ;
- un réseau (G) situé dans un plan conjugué optiquement avec ledit plan d'enregistrement (10), ledit réseau (G) définissant un premier et un second chemin optique, et ledit réseau (G) étant conçu pour diviser le premier faisceau de lumière en un faisceau de lumière diffractée d'ordre non nul le long du premier chemin optique en tant que faisceau de lumière de référence et en un deuxième faisceau de lumière à ordre de diffraction différent le long du second chemin optique ;
- une première lentille (L5) en aval de l'objectif du microscope, le réseau (G) étant situé dans le plan focal arrière de ladite première lentille ;
- une deuxième lentille (L6), le réseau (G) étant situé dans le plan focal avant de ladite deuxième lentille (L6) et une troisième lentille (L7) couplée optiquement à ladite deuxième lentille (L6), ledit plan d'enregistrement (10) étant situé dans le plan focal arrière de ladite troisième lentille (L7) et ladite troisième lentille étant conçue pour recombiner le faisceau de lumière de référence et le deuxième faisceau de lumière en un faisceau recombiné censé être incident sur le plan d'enregistrement où ils interfèrent l'un avec l'autre, dans lequel le chemin optique du faisceau de lumière de référence et le chemin optique du deuxième faisceau de lumière ne diffèrent pas d'une valeur supérieure à la longueur de cohérence de la source de lumière.

**2.** Microscope holographique numérique selon la revendication 1, dans lequel la cellule objet (Sa) est éclairée par le premier faisceau de lumière (1), ledit objectif de microscope (ML1) étant situé en amont du réseau (G) et dans lequel un coin (W) est situé dans le second chemin optique pour produire un hologramme différentiel.

**3.** Microscope holographique numérique hors-axe comprenant:

- une source de lumière partiellement cohérente spatialement et temporellement conçue pour produire un premier faisceau de lumière partiellement cohérente (1) ;
- un plan d'enregistrement (10) ;
- un objectif de microscope (ML1) ;
- une cellule objet (Sa) conçue pour maintenir un échantillon à étudier situé dans un plan focal avant dudit objectif de microscope et ladite cellule objet (Sa) étant conjuguée optiquement avec ledit plan d'enregistrement (10) ;
- un réseau (G) situé dans un plan conjugué optiquement avec ledit plan d'enregistrement (10) ;
- un interféromètre de Mach-Zehnder comprenant un premier diviseur de faisceau (Bs1) et un second diviseur de faisceau (Bs2), ledit premier diviseur de faisceau (Bs1) étant conçu pour diviser ledit premier faisceau de lumière en un deuxième faisceau de lumière (2) et un troisième faisceau de lumière (3) ;
- une première lentille (L5), située dans le chemin optique dudit troisième faisceau de lumière (3), conçue pour focaliser ledit troisième faisceau de lumière sur ledit réseau (G) ;
- une deuxième lentille (L6) ayant le même axe optique que la première lentille (L5) et située à une distance focale du réseau (G), conçue pour produire au moins un faisceau de lumière diffractée d'ordre non nul, et ledit second diviseur de faisceau (Bs2) étant conçu pour recombiner ledit deuxième faisceau de lumière et ledit faisceau de lumière diffractée en un faisceau recombiné ;
- un élément d'arrêt optique conçu pour arrêter la lumière diffractée d'ordre nul dudit troisième faisceau de lumière ;
- des moyens d'enregistrement conçus pour enregistrer des signaux interférométriques produits par l'interaction entre le deuxième faisceau de lumière et le faisceau de lumière diffractée, lesdits moyens d'enregistrement étant situés dans le plan d'enregistrement (10) dudit interféromètre (15) ;
- des moyens de focalisation (L7) conçus pour focaliser ledit faisceau recombiné sur lesdits moyens d'enregistrement, le trajet optique des deuxième et troisième faisceaux de lumière étant essentiellement équivalents et la cellule objet (Sa) et l'objectif de microscope étant situés face au premier diviseur de faisceau (Bs1), définissant une configuration holographique différentielle.

**4.** Microscope holographique numérique hors-axe comprenant:

- une source de lumière partiellement cohérente spatialement et temporellement conçue pour produire un premier faisceau de lumière partiellement cohérente (1) ;
- un plan d'enregistrement (10) ;
- un objectif de microscope (ML1) ;
- une cellule objet (Sa) conçue pour maintenir un échantillon à étudier situé dans un plan focal avant dudit objectif de microscope et ladite cellule objet (Sa) étant conjuguée optiquement avec ledit plan d'enregistrement (10) ;
- un réseau (G) situé dans un plan conjugué optiquement avec ledit plan d'enregistrement (10) ;
- un interféromètre de Mach-Zehnder comprenant un premier diviseur de faisceau (Bs1) et un second diviseur de faisceau (Bs2), ledit premier diviseur de faisceau (Bs1) étant conçu pour diviser ledit premier faisceau de lumière en un deuxième faisceau de lumière (2) et un troisième faisceau de lumière (3) ;
- une première lentille (L5), située dans le chemin optique dudit troisième faisceau de lumière (3), conçue pour focaliser ledit troisième faisceau de lumière sur ledit réseau (G) ;
- une deuxième lentille (L6) ayant le même axe optique que la première lentille (L5) et située à une distance focale du réseau (G) pour produire au moins un faisceau de lumière diffractée d'ordre non nul, et ledit second diviseur de faisceau (Bs2) étant conçu pour recombiner ledit deuxième faisceau de lumière et ledit faisceau de lumière diffractée en un faisceau recombiné ;
- un élément d'arrêt optique conçu pour arrêter la lumière diffractée d'ordre nul dudit troisième faisceau de lumière ;
- des moyens d'enregistrement conçus pour enregistrer des signaux interférométriques produits par l'interaction entre le deuxième faisceau de lumière et le faisceau de lumière diffractée, lesdits moyens d'enregistrement étant situés dans le plan d'enregistrement (10) dudit interféromètre (15) ;
- des moyens de focalisation (L7) conçus pour focaliser ledit faisceau recombiné sur lesdits moyens d'enregistrement, le trajet optique des deuxième et troisième faisceaux de lumière étant essentiellement équivalents et dans lequel la cellule objet (Sa) et l'objectif de microscope (ML1) sont situés dans le chemin optique du deuxième faisceau de lumière (2).

5. Microscope holographique numérique selon la revendication 4, dans lequel un second objectif de microscope (ML2) est situé dans le chemin optique du troisième faisceau de lumière (3).

6. Microscope holographique numérique selon la revendication 4, comprenant en outre un troisième diviseur de faisceau (BS3) situé sur le second trajet de faisceau de lumière pour éclairer un objet réfléchissant ($R_s$) et un quatrième diviseur de faisceau (BS4) situé le troisième trajet de faisceau de lumière pour éclairer un miroir de référence (16), définissant une géométrie de Mach-Zehnder.

7. Microscope holographique numérique selon l'une quelconque des revendications précédentes, dans lequel la source de lumière partiellement cohérente comprend des moyens d'éclairage (So) choisis dans le groupe constitué d'une DEL, d'une lampe à décharge gazeuse, de sources thermiques et d'un laser pulsé.

8. Microscope holographique numérique selon l'une des revendications 3 à 6, dans lequel lesdits moyens d'enregistrement sont des moyens d'enregistrement sensibles aux couleurs, et la source de lumière produit simultanément au moins trois longueurs d'ondes distinctes, pour enregistrer un interférogramme holographique en couleur.

9. Microscope holographique numérique selon la revendication 7, dans lequel ladite source de lumière comprend au moins trois DEL de longueurs d'ondes différentes.

10. Microscope holographique numérique selon la revendication 7 ou 8, dans lequel les longueurs d'ondes distinctes correspondent à Cyan, Magenta et Jaune (CMJ) ou Rouge Vert Bleu (RVB) pour la reconstruction des couleurs.

11. Microscope holographique numérique selon l'une quelconque des revendications précédentes comprenant une source d'excitation par fluorescence (17) couplée optiquement audit porte-échantillons.

Fig. 1

Fig. 2

Fig. 3

Fig. 4

**Fig. 5**

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7002691 B
- US 6525821 B
- EP 1631788 A
- EP 1399730 A
- US 3572934 A

### Non-patent literature cited in the description

- **I.YAMAGUCHI et al.** Phase-shifting digital holography. *Opt. Lett.,* 1997, vol. 22, 1268-1270
- **TAKEDA et al.** Fourier-transform method of fringe-pattern analysis for computer-based topography and interferometry. *J. Opt. Soc. Am.,* 1982, vol. 72, 156-160
- **DUBOIS et al.** Improved three-dimensional imaging with digital holography microscope using a partial spatial coherent source. *Appl. Opt.,* 1999, vol. 38, 7085-7094
- application of digital holographic microscopes with partially spatial coherence sources. *J. of Phys.: Conf. Series,* 2008, vol. 139
- Time resolved digital holography: a versatile tool for femtosecond laser induced damage studies'', (laser induced damage in Optical materials. *Proc of SPIE,* 2009, vol. 7504
- Resolution-enhanced approaches in digital holography. *Optical Measurement Systems for Industrial Inspection VI, Proc. of SPIE,* vol. 7389